# EUROPEAN PATENT APPLICATION

(11) **EP 3 754 124 A1**
(43) Date of publication of application: **23.12.2020**
(21) Application number: 19181286.6
(22) Date of filing: 19.06.2019
(51) Int. Cl.: E03F 3/04, E01C 11/22

(54) **DRAIN CHANNEL**

(71) Applicant: Valente, Carmine Franco, 03042 Atina, Frosinone (IT); Corvi, Carlo Graziano, 6964 Davesco Soragno (CH); Milesi, Christian, 6534 S. Vittore (CH)
(72) Inventor: Valente, Carmine Franco, 03042 Atina, Frosinone (IT); Corvi, Carlo Graziano, 6964 Davesco Soragno (CH); Milesi, Christian, 6534 S. Vittore (CH)
(74) Representative: Leihkauf, Steffen Falk

(57) **Abstract**

A drain channel (1), in particular for the disposal of rainwater from a road pavement (P), forming an upper wall (2) which defines a longitudinal axis (X), a transverse axis (Y) perpendicular to the longitudinal axis (X), and a vertical axis (Z) perpendicular to the longitudinal (X) and transverse (Y) axes, in which the upper wall (2) substantially extends over a plane defined by the longitudinal axis (X) and the transverse axis (Y); the drain channel (1) also forming a lower wall (3) opposite to the upper wall (2); two opposite side walls (4) which are transverse to the transverse axis (Y) and extend between the upper wall (2) and the lower wall (3); and two opposite end walls (13) which are transverse to the longitudinal axis (X) and extend between the upper wall (2), the lower wall (3) and the side walls (4); wherein, when the drain channel (1) is in an operational configuration, the upper wall (2) is substantially coplanar to the road pavement (P) and is exposed to the transit of vehicles, and the lower wall (3), the side walls (4) and the end walls (13) are below the road pavement (P), said drain channel (1) also forming a conveying conduit (5), extending in a direction parallel to the longitudinal axis (X), passing through the end walls (13), and adapted to convey and dispose of rainwater; at least one through slot (6), formed on the upper wall (2) of the drain channel (1) and leading into the conveying conduit (5), said through slot (6) being adapted to cause rainwater to flow away from the road pavement (P) to the conveying conduit (5) of the drain channel (1); wherein the drain channel (1) consists of a thermoplastic polymer monobloc body (7).

## Description

The present invention relates to a drain channel, in particular for the disposal of rainwater.

Drain channels for the disposal of rainwater of the prior art comprise a disposal base, generally made of vibrated or polymerized concrete, which defines a conveying channel which is open towards the top, for the conveyance and disposal of rainwater.

A drainage grid generally made of steel is associated on the top of the disposal base, the drainage grid having the dual function of supporting the transit of vehicles on the drain channel and draining the rainwater from the road pavement to the conveying channel of the disposal base of the drain channel.

The drain channels of the prior art have advantages, such as manufacturing and installation simplicity, reduced costs and good structural properties.

On the other hand, the drain channels of the prior art still have several drawbacks.

For example, the transit of vehicles on the drain channel over time causes a deformation of the drainage grid, which generates a discontinuity of the road pavement and hazards for the circulation of vehicles.

Moreover, the transit of vehicles continuously stresses the drainage grid against the disposal base, thus generating vibrations and bothersome noises at the connecting interface between these two elements. These noises are accentuated following the deformation of the drainage grid.

Another criticality is given by the different thermal deformation to which the metal drainage grid and the concrete disposal base are subject following environmental temperature swings to which the drain channel is exposed. The different thermal deformation of the drainage grid with respect to the disposal base causes mechanical tensions at the connecting interface between these two elements.

Moreover, under rigid weather conditions, the surface finish of the concrete conveying channel promotes the formation and adhesion of ice crystals which cause a partial occlusion of the conveying channel and a subsequent reduction of the disposal ability of the rainwater.

The drain channels of the prior art are also subject to wear and corrosion and require frequent maintenance.

It is the object of the present invention to provide a drain channel, in particular for the disposal of rainwater, having features such as to overcome the problems noted in the drain channels of the prior art.

It is a particular object of the present invention to provide a drain channel having superior mechanical and structural properties with respect to those of the prior art.

It is a further particular object of the present invention to provide a drain channel which is less subject to wear and corrosion and which requires less frequent maintenance.

It is a further particular object of the present invention to provide a drain channel which is more lightweight, mechanical resistance being equal, and which therefore facilitates the transport and installation thereof.

It is a further particular object of the present invention to provide a drain channel such as to reduce the noises which may be generated by the transit of vehicles on the drain channel.

It is a further particular object of the present invention to provide a drain channel having reduced manufacturing times and costs.

It is a further particular object of the present invention to provide a drain channel in which the risk of the partial occlusion thereof is reduced.

These and other objects are achieved by a drain channel, in particular for the disposal of rainwater from a road pavement, forming:
- an upper wall which defines:
   - a longitudinal axis,
   - a transverse axis perpendicular to the longitudinal axis, and
   - a vertical axis perpendicular to the longitudinal and transverse axes,
   in which the upper wall substantially extends over a plane defined by the longitudinal axis and the transverse axis;
- a lower wall opposite to the upper wall;
- two opposite side walls which are transverse to the transverse axis and extend between the upper wall and the lower wall; and
- two opposite end walls which are transverse to the longitudinal axis and extend between the upper wall, the lower wall and the side walls;
in which, when the drain channel is in an operational configuration, the upper wall is substantially coplanar to the road pavement and is exposed to the transit of vehicles, and the lower wall, the side walls and the end walls are below the road pavement, said drain channel also forming:
- a conveying conduit, extending in a direction parallel to the longitudinal axis, passing through the end walls, and adapted to convey and discharge rainwater;
- at least one through slot formed on the upper wall of the drain channel and leading into the conveying conduit, said through slot being adapted to cause rainwater to flow away from an outer surface of the upper wall (and therefore from the road pavement) to the conveying conduit of the drain channel;
in which the drain channel consists of a thermoplastic polymer monobloc body.

The drain channel thus configured is not subject to corrosion and has increased resistance to wear, therefore it requires less frequent maintenance with respect to the drain channels of the prior art.

Moreover, given that it consists of a one-piece body without discontinuity, i.e. without different elements assembled to one another, the drain channel of the invention is more resistant to the stresses due to the transit of the vehicles on the drain channel and less subject to plastic deformation.

Moreover, the drain channel thus configured is more lightweight with respect to the drain channels of the prior art, mechanical resistance being equal, therefore it has increased easiness of transport and installation.

Moreover, given that the drain channel of the invention consists of a monobloc body, it does not generate bothersome noises due to the transit of vehicles on the drain channel and otherwise generated at the connecting interfaces between the various elements forming the drain channels of the prior art.

Moreover, the inner thermoplastic polymer finish of the conveying conduit of the claimed drain channel is more viscous and less exposed to the adhesion of ice crystals under rigid weather conditions.

In order to better understand the invention and appreciate its advantages, some non-limiting examples of embodiments thereof will be described below with reference to the accompanying figures, in which:
- figure 1 is an axonometric view of a drain channel according to one embodiment of the invention;
- figure 2 is a longitudinal sectional view of the drain channel depicted in figure 1;
- figure 3 is a top view of the drain channel depicted in figure 1;
- figure 4 is a cross-section view, along a plane A-A, of the drain channel depicted in figure 1;
- figure 5 is a further cross-section view, along a plane B-B, of the drain channel depicted in figure 1;
- figure 6 is a cross-section view, along a plane C-C, of the drain channel depicted in figure 1;
- figure 7 is a cross-section view of a drain channel according to a further embodiment;
- figure 8 is an axonometric view of a rainwater disposal system, in a disassembled configuration, according to one embodiment;
- figure 9 is a longitudinal sectional view of the rainwater disposal system depicted in figure 8, in a disassembled configuration;
- figure 10 is a longitudinal sectional view of the rainwater disposal system depicted in figure 8, in an assembled configuration;
- figure 11 is a cross-section view of the rainwater disposal system depicted in figure 8, in an assembled configuration;
- figure 12 is a front view of an element of the rainwater disposal system depicted in figure 8, according to one embodiment;
- figures 13 to 17 show different applications of a drain channel according to embodiments.

With reference to the drawings, a drain channel, in particular for the disposal of rainwater from a road pavement P, is indicated as a whole with numeral 1.

Drain channel 1 forms an upper wall 2 which defines a longitudinal axis X, a transverse axis Y perpendicular to the longitudinal axis X, and a vertical axis Z perpendicular to the longitudinal X and transverse Y axes.

The upper wall 2 substantially extends over a plane defined by the longitudinal axis X and the transverse axis Y.

The drain channel also forms a lower wall 3 opposite to the upper wall 2; two opposite side walls 4 which are transverse to the transverse axis Y and extend between the upper wall 2 and the lower wall 3; and two opposite end walls 13 which are transverse to the longitudinal axis X and extend between the upper wall 2 and the lower wall 3 and the side walls 4.

When drain channel 1 is in an operational configuration, the upper wall 2 is substantially coplanar to the road pavement P and is exposed to the transit of vehicles, and the lower wall 3, the side walls 4 and the end walls 13 are below the road pavement P.

Drain channel 1 forms a conveying conduit 5, extending in a direction parallel to the longitudinal axis X, passing through the end walls 13, and adapted to convey and dispose of rainwater.

Moreover, drain channel 1 forms at least one through slot 6, formed on the upper wall 2 of drain channel 1, and leading into the conveying conduit 5.

The through slot 6 is adapted to cause rainwater to flow away from an outer surface of the upper wall 2 (and therefore from the road pavement P) to the conveying conduit 5 of drain channel 1.

According to one aspect of the invention, drain channel 1 consists of a thermoplastic polymer monobloc body 7.

Given that it is made of thermoplastic polymer, drain channel 1 thus configured is not subject to corrosion and has a significant resistance to wear, therefore it requires less frequent maintenance with respect to the drain channels of the prior art.

Moreover, given that drain channel 1 is without discontinuity, i.e. it does not consist of a plurality of elements assembled to one another, it is more resistant to the stresses due to the transit of the vehicles on it and less subject to plastic deformation.

Moreover, drain channel 1 thus configured is more lightweight with respect to the drain channels of the prior art, mechanical resistance to the stresses due to the transit of the vehicles being equal, therefore it has increased easiness of transport and installation.

Moreover, given that the drain channel 1 of the invention consists of a monobloc body 7, it does not generate bothersome noises due to the transit of vehicles on drain channel 1 and otherwise generated at the connecting interfaces between the various elements forming the drain channels of the prior art.

Moreover, the inner thermoplastic polymer finish of the conveying conduit 5 of the drain channel 1 of the invention, is more viscous and less exposed to the adhesion of ice crystals under rigid weather conditions.

According to one embodiment, drain channel 1 is formed of thermoplastic polymer, e.g. of polyamide, e.g. PA 6.6 AKULON or of PA 4.6 STANYL.

According to one embodiment of the invention, the upper wall 2, the lower wall 3, the side walls 4 and the end walls 13 have substantially planar shape.

Advantageously, such a configuration ensures the continuity and uniformity of the road pavement P in which drain channel 1 is installed and simultaneously minimizes the encumbrance of drain channel 1, thus promoting the storage and transport of a plurality of drain channels 1 towards the location in which they are intended to be installed.

Each of the side walls 4 forms a first joining end 8 with the upper wall 2 and a second joining end 9 with the lower wall 3.

According to one embodiment, each side wall 4 forms, at the first joining end 8, a first groove 10 extending in a direction parallel to the longitudinal axis X.

According to a preferred embodiment, the first groove 10 defines, in cross section to the longitudinal axis X, a profile having a substantially right angle.

Each side wall 4 forms, at the second joining end 9, a second groove 11 extending in a direction parallel to the longitudinal axis X.

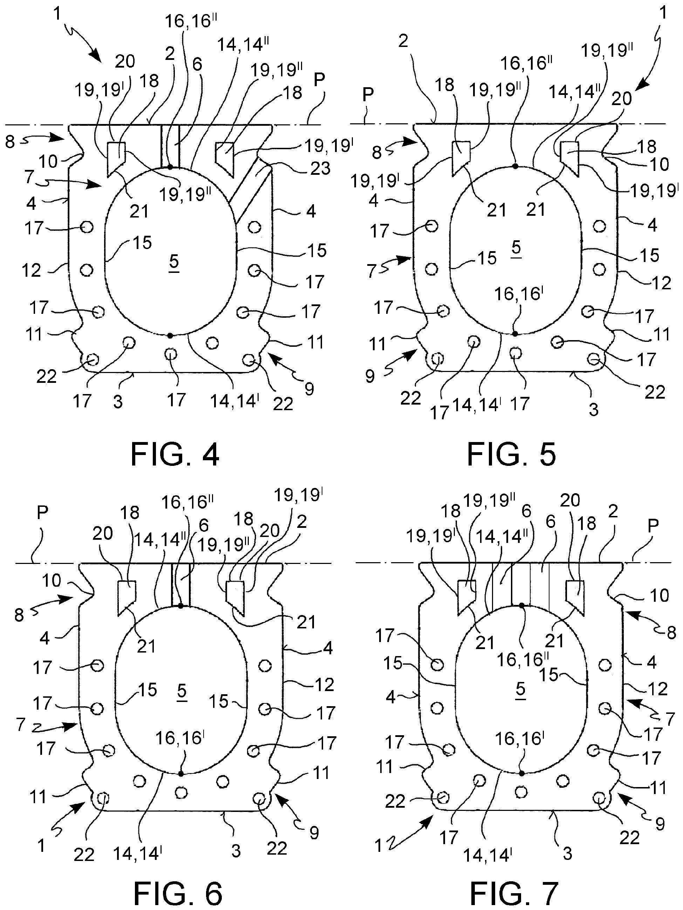

Groove 11 defines, in cross section to the longitudinal axis X, an "S"- or "Z"-profile (Figures 4 to 7).

According to a preferred embodiment, the "S"- or "Z"-profile of the second groove 11 defines two right angles.

Advantageously, the "S"- or "Z"-profile of the second groove 11 serves as anchoring, for drain channel 1, to the ground below the road pavement P and increases the stability and sturdiness of the installation of drain channel 1.

Each side wall 4 forms a planar portion 12 between the first groove 10 and the second groove 11. The planar portion 12 promotes the adhesion of the side walls 4 to the ground below the road pavement P.

According to one embodiment of the invention, the conveying conduit 5 has a profile, in cross section to the longitudinal direction X, consisting of two semi-circumferences or arcs 14, of which one semi-circumference 14' at the lower wall 3 and with concavity facing the upper wall 2, and one semi-circumference or arc 14" at the upper wall 2 and with concavity facing the lower wall 3, and in which two substantially straight segments 15 parallel to the vertical axis Z, extending from the ends of the two semi-circumferences or arcs 14, are interposed between the two semi-circumferences or arcs 14.

The two semi-circumferences or arcs 14', 14" each define a respective vertex 16', 16".

According to an advantageous embodiment, the distance between the vertexes 16', 16" is about 25% greater than the distance between the two segments 15.

Advantageously, drain channel 1 thus configured discharges the weight of the vehicles transiting on the upper wall 2 by means of compression stresses (as occurs in an architectural arch) and not by means of shearing stresses (to which the drainage grids of the prior art instead are subject), thus being considerably solid.

Moreover, the sturdiness of drain channel 1 is increased, disposable flow rate of rainwater being equal (i.e. opening of the conveying conduit 5 being equal).

According to one embodiment, drain channel 1 contains a plurality of circular-section holes 17 passing through the end walls 13, which are parallel to the longitudinal axis X and are arranged or distributed externally, peripherally, about the conveying conduit 5, at least at the lower wall 3 and the side walls 4.

Drain channel 1 also forms an additional circular-section hole 22 passing through the end walls 13 and parallel to the longitudinal axis X, at each first joining end 9.

The holes 17 and 22 lighten the weight of drain channel 1.

According to one embodiment, drain channel 1 forms two shaped holes 18 passing through the end walls 13, which are parallel to the longitudinal axis X and are each positioned at a first joining end 8 of the side walls 4.

Each shaped hole 18 defines a rectangular trapezoid in cross section to the longitudinal axis X.

A first side edge 19' and a second side edge 19" of the shaped hole 18, which are parallel to the vertical axis Z, form the two bases of the rectangular trapezoid.

The first side edge 19' has a greater length with respect to the second side edge 19" and is positioned at a lesser distance from the respective side wall 4 with respect to the second side edge 19".

An upper edge 20 of the shaped hole 18, which is parallel to the upper wall 2, forms the height of the rectangular trapezoid.

A lower edge 21 of the shaped hole 18 forms the oblique side of the rectangular trapezoid and extends from the first side edge 19' to the second side edge 19", in direction of the upper wall 2.

The hole 18 lightens the weight of the drain channel and increases the resistance of the cross section of drain channel 1 in that point.

According to one embodiment, drain channel 1 forms, in the side walls 4, a plurality of collecting holes 23 leading into and putting into communication the (inner) conveying conduit 5 and an outer surface, e.g. the first (outer) grooves 10, of the side walls 4.

The collecting holes 23 extend inwards from the outside of drain channel 1 with a slope, in direction of the lower plane 3 so as to promote the evacuation of water towards the conveying conduit 5.

According to a preferred embodiment, the collecting holes 23 are arranged spaced apart along a direction parallel to the longitudinal axis X and each extend over a plane transverse to the longitudinal axis X.

The collecting holes 23 preferably have circular cross section.

The collecting holes 23 thus configured advantageously collect the water of the deep infiltrations (the water able to filter through the road pavement P) and channel it into the conveying conduit 5.

According to an advantageous embodiment, the collecting holes 23 are formed in the first groove 10 of the side walls 4.

This advantageously increasingly exposes the collecting holes 23 to the water which infiltrated the road pavement P and therefore increases the conveying efficiency of the deep infiltrations into the conveying channel 5 and the successive disposal thereof.

According to one embodiment, the at least one through slot 6 formed on the upper wall 2 extends in length in a direction parallel to the longitudinal axis X.

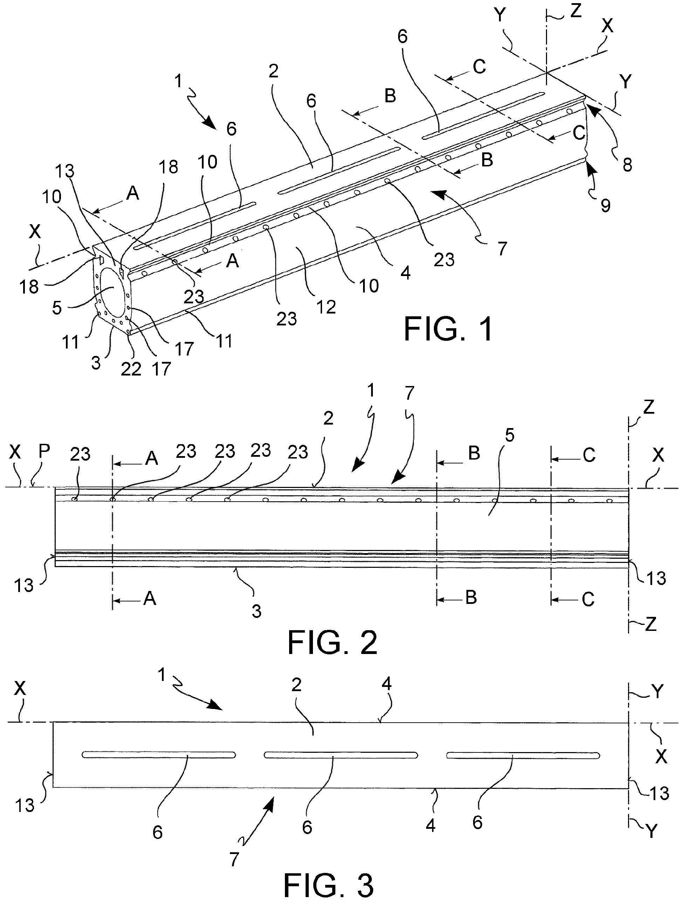

According to a further embodiment of the invention, drain channel 1 forms three through slots 6, extending and aligned one after the other along a direction parallel to the longitudinal axis X (Figures 1, 3 and 6).

The three through slots 6 thus configured optimize the transfer of the rainwater from the road pavement P to the conveying conduit 5, simultaneously preserving the mechanical resistance of the upper wall 2 of drain channel 1 against the transit of vehicles.

According to one embodiment of the invention, drain channel 1 forms, on the upper wall 2, two rows of through slots 6 which are parallel along the longitudinal direction X (Fig. 7).

According to one embodiment, drain channel 1 forms, on the end walls 13, a connecting groove 24 extending in drain channel 1 in a direction parallel to the longitudinal axis X.

The connecting groove 24 forms, in cross section to the longitudinal axis X, a closed curve extending externally about the conveying conduit 5, which preferably replicates the profile thereof.

According to a further aspect of the invention, a rainwater disposal system 25 comprises at least two drain channels 1, of which a first drain channel 1' and a second drain channel 1" aligned along the longitudinal axis X so that an end wall 13' and a connecting groove 24' of the first drain channel 1' face, without contact, an end wall 13" and a connecting groove 24" of the second drain channel 1".

The rainwater disposal system further comprises at least one connecting tube 26, interposed between the first drain channel 1' and the second drain channel 1" and inserted in the connecting groove 24' of the first drain channel 1' and in the connecting groove 24" of the second drain channel 1" so as to connect the first drain channel 1' to the second drain channel 1".

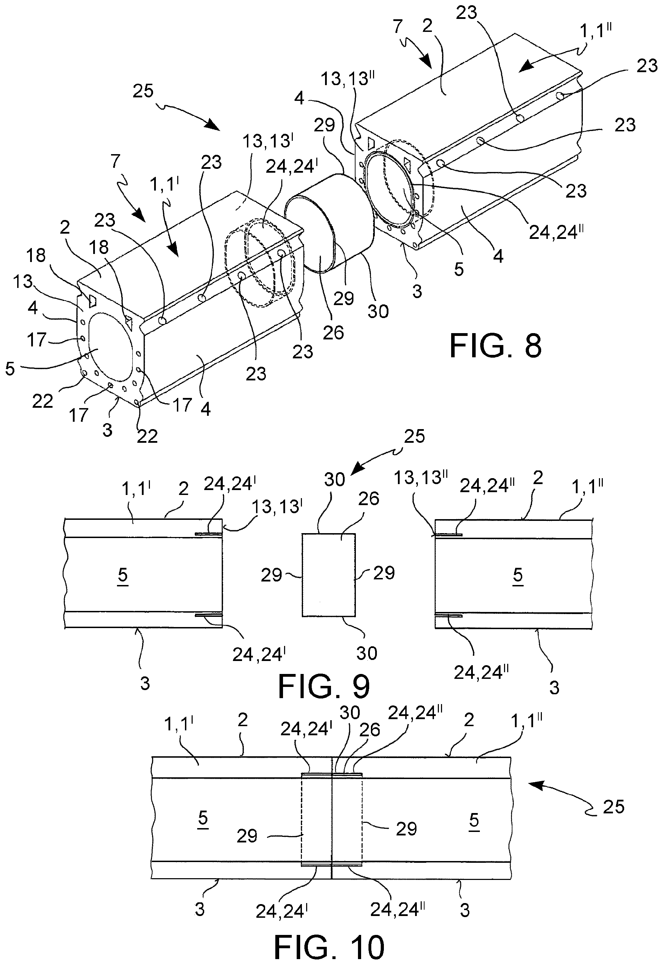

According to one embodiment, (in an operational configuration) the connecting tube 26 substantially has the shape of an extended cylinder, along the longitudinal axis X, and having bases 29 with shape adapted to be geometrically coupled to the connecting groove 24 and height 30 substantially equal to twice the length of the extension of the connecting groove 24 inside drain channel 1 (Figures 8 to 10).

According to one embodiment, the connecting tube 26 is made of PVC.

The connecting tube 26 thus configured advantageously connects the first drain channel 1' to the second drain channel 1" by means of interference, and creates a solid connection suitable for accommodating related micro-movements between the first drain channel 1' and the second drain channel 1" (due to the settling of the ground below the road pavement P, for example).

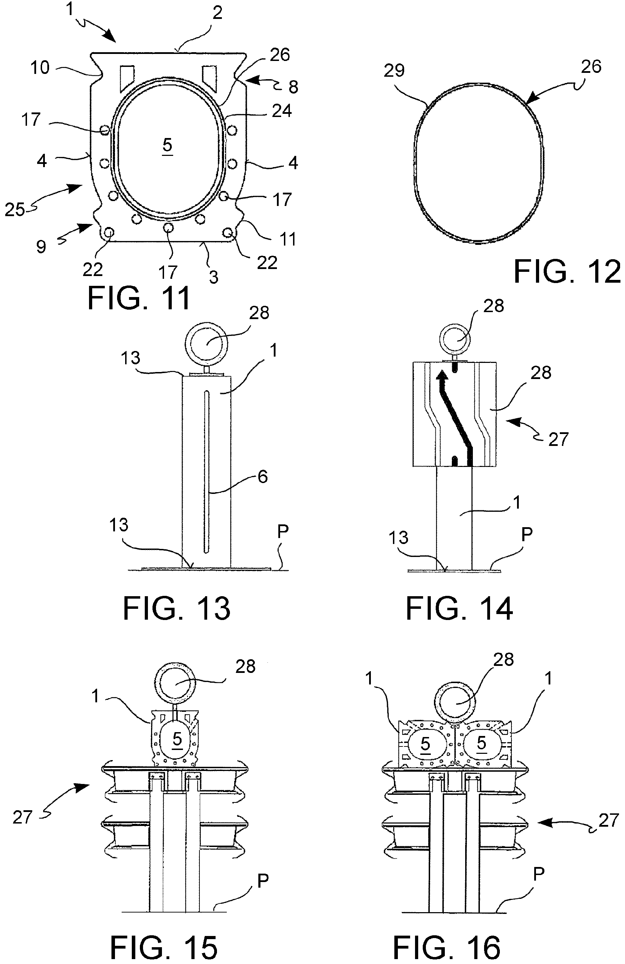

According to a further aspect of the invention, drain channel 1 can be used in several further applications concerning the field of road infrastructures, some of which are depicted in Figures 13 to 17.

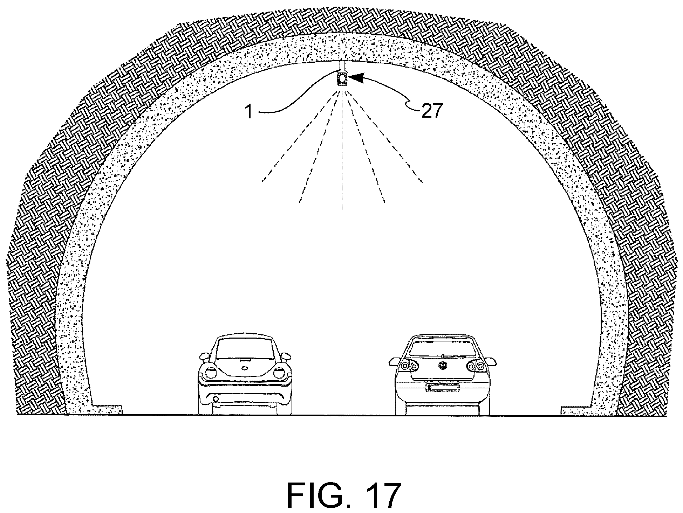

According to one aspect of the invention for example, a road signal 27 comprises a drain channel 1 arranged above the road pavement P and connected to the road pavement P or to other surfaces of the road infrastructure such as for example, the vault of a tunnel (Fig. 17) or other supports (Figures 15 to 16), at an end wall 13 or of the lower wall 3.

The road signal 27 further comprises a road sign 28 affixed to drain channel 1.

Optionally, a lighting device (e.g. LED) is located inside the conveying conduit 5 such as to emit light towards the at least one through slot 6, towards the outside of drain channel 1 (Fig. 13).

With respect to the known art, a road signal 27 of this type results in all the technical advantages described above, such as increased resistance to corrosion and wear, lightness and solidity, storing and transport easiness.

According to a further aspect of the invention, a production process of a drain channel 1 consists in manufacturing drain channel 1 by means of extrusion.

The production process by means of extrusion advantageously reduces production times and costs.

Further advantageously, the extrusion process allows long drain channels 1 to be manufactured, in direction of the longitudinal axis X, up to 6 m.

This reduces the number of joining tubes 26 required to connect the plurality of drain channels 1 used to build the rainwater disposal system 25 and reduces greasy or oleic water leaks below the road pavement P.

Those skilled on the art, aiming at meeting contingent and specific needs, can make further changes and variations to drain channel 1, to the rainwater disposal system 25 and to the production process of a drain channel 1 described, all contained within the scope of protection of the invention, which is defined by the following claims.

## Claims

1. A drain channel (1), in particular for the disposal of rainwater from a road pavement (P), forming:
- an upper wall (2) which defines:
- a longitudinal axis (X),
- a transverse axis (Y) perpendicular to the longitudinal axis (X), and
- a vertical axis (Z) perpendicular to the longitudinal (X) and transverse (Y) axes,
wherein the upper wall (2) substantially extends over a plane defined by the longitudinal axis (X) and the transverse axis (Y);
- a lower wall (3) opposite to the upper wall (2);
- two opposite side walls (4) which are transverse to the transverse axis (Y) and extend between the upper wall (2) and the lower wall (3); and
- two opposite end walls (13) which are transverse to the longitudinal axis (X) and extend between the upper wall (2), the lower wall (3) and the side walls (4);
wherein, when the drain channel (1) is in an operational configuration, the upper wall (2) is substantially coplanar to the road pavement (P) and is exposed to the transit of vehicles, and the lower wall (3), the side walls (4) and the end walls (13) are below the road pavement (P),
said drain channel (1) also forming:
- a conveying conduit (5), extending in a direction parallel to the longitudinal axis (X), passing through the end walls (13), and adapted to convey and dispose of rainwater;
- at least one through slot (6) formed on the upper wall (2) of the drain channel (1) and leading into the conveying conduit (5), said through slot (6) being adapted to cause rainwater to flow away from the road pavement (P) to the conveying conduit (5) of the drain channel (1);
**characterized in that** it consists of a thermoplastic polymer monobloc body (7).

2. A drain channel (1) according to claim 1, formed in thermoplastic polymer PA 6.6 AKULON or in thermoplastic polymer PA 4.6 STANYL.

3. A drain channel (1) according to claim 1 or 2, wherein the upper wall (2), the lower wall (3), the side walls (4) and the end walls (13) have a planar shape, and wherein each of the side walls (4) forms:
- a first joining end (8) with the upper wall (2) and a second joining end (9) with the lower wall (3);
- a first groove (10) at the first joining end (8), extending in a direction parallel to the longitudinal axis (X);
- a second groove (11) at the second joining end (9), extending in a direction parallel to the longitudinal axis (X);
- a planar portion (12) between the first groove (10) and the second groove (11).

4. A drain channel (1) according to any one of the preceding claims, wherein the conveying conduit (5) has a profile, in cross section to the longitudinal direction (X), consisting of two semi-circumferences (14), of which one semi-circumference (14') at the lower wall (3) and with concavity facing the upper wall (2), and one semi-circumference (14") at the upper wall (2) and with concavity facing the lower wall (3), and wherein two straight segments (15) parallel to the vertical axis (Z), extending from the ends of the two semi-circumferences (14), are interposed between the two semi-circumferences (14),
and wherein the two semi-circumferences (14', 14") each define a respective circumference vertex (16', 16") and the distance between the semi-circumference vertexes (16', 16") is 25% greater than the distance between the two segments (15).

5. A drain channel (1) according to claim 3, forming:
- a plurality of circular-section holes (17) passing through the end walls (13), which are parallel to the longitudinal axis (X) and are arranged peripherally about the conveying conduit (5), at the lower wall (3) and the side walls (4), and/or
- an additional circular-section hole (22) passing through the end walls (13) and parallel to the longitudinal axis (X), at each first joining end (9), and/or
- two shaped holes (18) passing through the end walls (13), which are parallel to the longitudinal axis (X) and are each positioned at a first joining end (8) of the side walls (4) and wherein each shaped hole (18) defines a rectangular trapezoid in transverse section to the longitudinal axis (X).

6. A drain channel (1) according to any one of the preceding claims, forming, on the side walls (4), a plurality of collecting holes (23) leading into the conveying conduit (5) and extending from the outside towards the inside of the drain channel (1) in direction of the lower plane (3),
and wherein the collecting holes (23) are arranged spaced apart along a direction parallel to the longitudinal axis (X) and each extend over a plane transverse to the longitudinal axis (X).

7. A drain channel (1) according to claim 6, wherein the collecting holes (23) are formed in the first groove (10) of the side walls (4).

8. A drain channel (1) according to any one of the preceding claims, wherein the at least one through slot (6) formed on the upper wall (2) extends in length in a direction parallel to the longitudinal axis (X).

9. A drain channel (1) according to any one of the preceding claims, forming, on the upper wall (2), two rows of through slots (6) which are parallel along the longitudinal direction (X).

10. A drain channel (1) according to any one of the preceding claims, forming, on the end walls (13), a connecting groove (24) extending in the drain channel (1) in a direction parallel to the longitudinal axis (X),
wherein the connecting groove (24) forms, in cross section to the longitudinal axis (X), a closed curve extending externally about the conveying conduit (5), replicating the profile of the conveying conduit (5).

11. A rainwater disposal system (25), comprising:
- at least two drain channels (1) according to claim 10, of which a first drain channel (1') and a second drain channel (1") aligned along the longitudinal axis (X) so that an end wall (13') and a connecting groove (24') of the first drain channel (1') face, without contact, an end wall (13") and a connecting groove (24") of the second drain channel (1");
- at least one connecting tube (26), interposed between the first drain channel (1') and the second drain channel (1") and inserted in the connecting groove (24') of the first drain channel (1') and in the connecting groove (24") of the second drain channel (1") so as to connect the first drain channel (1') to the second drain channel (1").

12. A rainwater disposal system (25) according to claim 11, wherein, in the operational configuration, the connecting tube (26) has the shape of an extended cylinder, along the longitudinal axis (X), and having bases (29) having a shape adapted to be geometrically coupled to the connecting groove (24) of the drain channel (1), and height (30) equal to twice the length of the extension of the connecting groove (24) inside the drain channel (1).

13. A rainwater disposal system (25) according to claim 11 or 12, wherein the connecting tube (26) is made of PVC.

14. A road signal (27), comprising a drain channel (1) according to any one of claims 1 to 10, a road sign (28) affixed on the drain channel (1) and optionally, a lighting device located inside the conveying conduit (5) such as to emit light towards the at least one through slot 6, towards the outside of the drain channel (1).

15. A method for manufacturing a drain channel (1) according to any one of claims 1 to 10, comprising the step of obtaining said upper wall (2), lower wall (3), side walls (4) and end walls (13) together by means of extrusion.
